# EUROPEAN PATENT APPLICATION

(11) **EP 0 853 010 A1**
(43) Date of publication of application: **15.07.1998**
(21) Application number: 98100118.3
(22) Date of filing: 07.01.1998
(51) Int. Cl.: B60C 19/08, B60C 11/18, B60C 11/00

(54) **Tyre having silica reinforced rubber tread with conductive rubber strip**

(30) Priority: 13.01.1997 US 778071
(71) Applicant: THE GOODYEAR TIRE & RUBBER COMPANY, Akron, Ohio 44316-0001 (US)
(72) Inventor: Pompei, Manuela, Kayl 3671 (LU); Thise, Ghislain Adolphe Leon, Wardin 6600 (BE); Bergh, Jean, (nmn), Vianden 9414 (LU)
(74) Representative: Leitz, Paul

(57) **Abstract**

The invention relates to a rubber tire having a tread composed of (i) a tread designed to be road-contacting and composed of a relatively high electrical resistance rubber composition, (ii) peripheral, lateral extensions of said tread as wings composed of a relatively low electrical resistance rubber composition and (iii) a thin strip, which might sometimes be referred to as a tread strip or gum strip, of relatively low electrical resistance rubber composition positioned on a portion of the face of the tread and extending into the interface between said tread and said tread wings.

In one aspect, the invention relates to such rubber tire where said tread is quantitatively reinforced with silica.

## Description

### Field

The invention, in general, relates to a rubber tire having a tread composed of (i) a tread designed to be ground-contacting and composed of a relatively high electrical resistance rubber composition, (ii) peripheral, lateral extensions of said tread as wings composed of a relatively low electrical resistance rubber composition. Thus, the ground-contacting portion of the tread is of a different composition and electrical characteristic then the tread wings.

In one aspect, the invention relates to such rubber tire having a carbon black reinforced carcass where said tread is quantitatively reinforced with silica with a minimal, of any carbon black and said wings contain at least 30 phr of carbon black reinforcement.

### Background

Pneumatic rubber tires are conventionally prepared with a rubber tread which can be a blend of various rubbers which are, typically, sulfur curable or sulfur cured as the case may be, diene based elastomers. The tire rubber, including its tread portion, is typically reinforced with carbon black reinforcing filler and sometimes with silica.

For the background for this invention, it is recognized that treads of rubber tires are often prepared of a cap/base construction in which the outer portion of the tread is the cap and the underlying part of the tread between the tread cap and the supporting tire carcass, is its base. The tread cap portion is usually designed to ground-contacting and, thus, have associated properties and the tread base portion generally overlays the tire carcass and is usually designed to support the cap, therefore, not to be ground-contacting. Such cap/base constructions are well known to those skilled in the art.

Also, for the background for this invention, it is recognized that a tread of cap/base construction can be provided in which the tread cap is substantially reinforced with silica, with minimal if any amount of carbon black, and the underlying tread base is substantially carbon black reinforced.

Further, for the background for this invention, it is recognized that a tire tread, or sometimes the tread base in the case of a cap/base construction may have on both sides of the tread a lateral wing in which a portion of the tread, or tread base as the case may be, extends outward and over a portion of the outer surface of the tire sidewall of the tire carcass.

For the purposes of this invention as hereinbefore discussed, the ground-contacting part of the tread has a composition and electrical characteristic different from the tread wings.

In consideration of background for this invention, a tire may be viewed as being composed of a circumferential tread and supporting carcass therefor. The carcass is viewed as being composed of relatively conventional elements which include but are not limited to carbon black reinforced rubber sidewalls (although a portion of an outer surface of the sidewalls may be colored by an appropriate pigment such as, for example, white titanium dioxide and, thus, not contain carbon black), beads, apex, innerliner and the supporting carcass plies, including fabric reinforced plies. A shoulder region of a tire is considered as being a portion of the tire where its sidewall meets its tread. The shoulder region is not normally a sharp line of demarkation and its actual position may vary somewhat from tire to tire. The bead portion of the carcass is typically composed of a relatively inextensible bundle of wires which is encased in carbon black reinforced rubber and is designed to contact a metal rim on which the tire itself is mounted to form a tire/rim assembly which itself is conventionally adapted to be mounted on a vehicle, particularly a wheel of a vehicle. The rim is typically steel or aluminum, or alloy thereof and is, thus, electrically conductive since the metal is considered as having a very low resistance to flow of electricity. The term "metal", as used herein for the metal rim, is intended to mean electrically conductive metals such as, for example, the aforesaid steel and aluminum rims as would be understood by those having skill in such art.

By the term "carbon black" reinforced, it is meant that the rubber components of the tire carcass rubber which are carbon black reinforced, contain a quantitative amount of carbon black reinforcement, normally at least 25 phr, usually at least 35 phr, and a minimal amount, if any, of silica and the weight ratio of carbon black to silica is at least 5/1.

It is acknowledged that, in some tire constructions, carbon black reinforced rubber components such as, for example, components which are sometimes known as chippers and chafers may be positioned in the bead area or region of the tire construction to assist in cushioning the bead component against the metal rim. In the context of this description, a reference to the aforesaid bead component of the tire carcass is intended to include such other associated rubber components unless otherwise indicated, and thereby are a part of the tire carcass.

In practice, as is well known to those having skill in such art, the tire, which may sometimes be referred to as a pneumatic tire, is mounted on the metal rim and air pressure is applied to the cavity enveloped by the metal rim and the pneumatic tire carcass.

The hereinbefore construction elements, or components, of a pneumatic tire and tire carcass, as well as such tire/rim assembly, are also well known to those familiar with such tire art.

It is important to appreciate that uncompounded rubber by itself is generally considered as being, substantially, an electrical insulator or, in other words, a rather poor conductor of electricity.

A carbon black reinforced rubber vehicular tire, while still providing a degree of resistance to flow of electricity, has a considerably higher electrical conductivity, or lower resistance to flow of electricity, than rubber without the carbon black reinforcement.

It is considered herein that, conventionally, a continuous relatively low electrical resistance path is created between the electrically conductive metal rim of a tire/wheel (tire/rim) assembly to the outer tire tread surface, and thence to the ground via the carbon black reinforced rubber of the tire, including its ground-contacting tread component, for such a tire/rim assembly mounted on a vehicle which is intended to travel over the ground.

In this manner, it is considered herein that potential electrical energy, which may potentially be created by components of or within a moving vehicle as its rotating wheels and associated tire/rim assemblies as they travel over the ground, is conventionally dissipated from the rim of a tire/rim assembly on the vehicle to the ground via the carbon black reinforced rubber path of the tire carcass and tread, or tread cap of a tread of a cap/base construction, which tread or tread cap, as the case may be, is normally the outer rubber surface of the tire intended to be ground-contacting.

Thus, in one aspect, it is considered herein that the carbon black reinforced rubber of the tire carcass and associated tread normally provide a sufficiently low electrical resistance path to dissipate potential electrical energy and, thereby, retard or eliminate static electrical charge from building up and/or accumulating under dynamic conditions of a rotating tire on a vehicle traveling across the ground.

Alternatively, in practice, carbon black reinforced rubber tires may sometimes be prepared which have outer rubber treads designed to be ground-contacting which are quantitatively reinforced with silica and, thus, contain only minimal amounts such as, for example, 15 phr or less, of carbon black.

The silica reinforced tread itself, which contains only a minimal amount of carbon black if any, may have a substantially high electrical resistance on an order of at least ten thousand, and often at least twenty thousand, megohms and, thus, such tread creates a degree of electrical insulating effect between the tire carcass and ground. Such a tire construction has a substantially less tendency to dissipate static electricity from the tire to the ground, and particularly from the metal rim of a tire/rim assembly to the outer surface of the tire tread and thence to the ground, which may be generated by a dynamic condition of the rotation of the tire on a moving vehicle. Accordingly, a potential for static electricity to build-up, or increase, is considered to be higher for such a tire construction with a silica reinforced tread than for a similar tire with a carbon black reinforced tread.

Therefore, it is desirable to provide a suitable path of relatively low electrical resistance between the tire bead portion and the tread outer surface for such a tire having a quantitative silica reinforced rubber tread and minimal, if any, carbon black reinforcement.

For a tire tread conventionally configured with a combination of lugs and grooves, it is desired that the grooves connect directly or indirectly with the carbon black reinforced tread wings or the rubber shoulder of the tire, the area of the tire where the sidewall and tread meet, in order for the carbon black reinforced outer cap layer to more fully connect with the carbon black reinforced rubber portion of the tire.

In practice, it is desirable that the rubber outer tread strip layer(s) extend into at least a portion of the interface, and sometimes preferably for the full length of the interface, between said tread and at least one of said wings (i) contains a quantitative amount of carbon black and is of a relatively low electrical resistance to aid in dissipation of electrical energy under the aforesaid conditions, (ii) is co-extruded through a single die and then co-vulcanized with the rubber tire tread and associated wing(s) in order that it be integral with the tread and the walls of grooves of a tire tread configuration composed of lugs and grooves, (iii) be relatively thin so that it does not appreciably affect the tread properties of the tread, and (iv) be thick enough so a cross-section of the layer on the walls of a lug in a tread of a lug and groove configuration can present a suitably low electrical resistance to the ground so that it is not necessary to limit the selection of carbon blacks to carbon blacks with exceptionally low electrical resistance.

Indeed, it is expected that the outer cap rubber composition will wear off of the outer surface of tire tread lugs during use of the tire so that the cross-section, or thickness, of the outer cap layer on the lug walls is relied upon to present a path of relatively low electrical resistance from the tread to the ground.

As used herein, the terms "quantitatively reinforced with silica", "quantitative silica reinforced rubber" and the like are generally used in conjunction with a tire tread intended to be ground-contacting, which can be a tread cap in a tread cap/base construction, which contains about 30 to about 100, sometimes preferably about 30 to about 90 phr, of silica, and which may also optionally contain carbon black in which the carbon black is present in not more than about 20 phr. Often it is preferred that the ratio of silica to carbon black is at least 2/1 and sometimes at least 10/1.

The term "phr" as used herein, and according to conventional practice, refers to "parts of a respective material per 100 parts by weight of rubber". In the description herein, rubber and elastomer are used interchangeably.

In the description herein, the term "vulcanized" or "vulcanizable", may, on occasion, be used interchangeably with the terms "cured" and "curable".

### Summary and Practice of the Invention

In accordance with this invention, a pneumatic tire is provided having a circumferential rubber tread of a lug and groove configuration supported by a carbon black reinforced rubber carcass having two individual sidewalls with each sidewall connecting to one of two spaced apart individual bead portions, wherein said tread is composed of (i) a tread cap designed to be ground-contacting, (ii) a tread base underlying said tread cap, (iii) two individual tread wings, each tread wing being a lateral extension of a peripheral edge of said tread and (iv) two circumferential, thin, outer tread strips, each individual tread strip being a part of a portion of the face of the said tread adjacent to each of said tread wings to include at least a portion of at least one tread groove adjacent to at least one tread lug; wherein each tread strip extends to and includes at least a portion of the interface between said tread and tread wings, all without overlapping an exterior surface of said tread wings and without extending to said bead portions; wherein said tread wings each individually contact and extend over a portion of the outer surface of a sidewall of the tire carcass; wherein said tread cap is a rubber composition which contains about 30 to about 100 phr of precipitated silica and, optionally, up to about 20 phr of carbon black; and wherein said tread strips, tread wings and tread base are rubber compositions which contain about 25 to about 100 phr of carbon black.

In one aspect of the contemplated invention, said tread cap contains about 30 to about 100, alternatively about 40 to about 90, phr of precipitated silica and, optionally, up to about 20 phr of carbon black and wherein said thin tread strip contains about 25 to about 100 phr of carbon black having a BET value in a range of about 30 to about 1000 m²g.

In one aspect, it is sometimes preferable that, for the tire tread, the weight ratio of silica to carbon black, if carbon black is used, is at least about 1/1, often at least 2/1 and alternatively at least 10/1.

Such tire is vulcanized whereby the said thin tread strip is co-vulcanized and integral with said tread cap and wings and wherein said tread has a lug and groove configuration.

In one aspect of the invention, such tire is provided wherein the said thin tread strip is integral with and circumferentially covers the peripheral outer surface of each side of the outer tread surface designed to be ground-contacting and covers less than the total outer surface of the tread. For example, such thin tread strip may cover at least 10 or twenty percent and less than eighty percent of the outer surface of the tread.

As an alternate embodiment of this invention, the tire tread is composed of said tread cap, tread wings and tread strips. In practice, the tread cap, tread wings and said tread strip may be formed as a single component by simultaneous tri-extrusion of individual rubber compositions through a same, single die at a temperature in a range of about 80°C to about 150°C.

In another embodiment of the invention, the tire tread is composed of said tread cap, tread wings, tread base, and tread strips, wherein said tread strips and tread wings are of a single, unitary rubber composition. In practice the tread cap, tread wings, tread base, and said tread strip may be formed as a single component, wherein said tread wings and tread base are of a single, unitary rubber composition, by simultaneous tri-extrusion of individual rubber compositions through a same, single die at a temperature in a range of about 80°C to about 150°C.

In a further embodiment of the invention the tire is composed of said tread cap, tread wings, tread base, and tread strips, wherein said tread strips and tread base are of a single, unitary rubber composition. In practice, the tread cap, tread wings, tread base, and said tread strip are formed as a single component, wherein said tread strips and tread base are of a single, unitary composition, by simultaneous tri-extrusion of individual rubber compositions through a same, single die at a temperature in a range of about 80°C to about 150°C.

In practice, the said tread laminae the co-extrusions or tri-extrusions are conducted at a temperature in a range of about 80°C to about 150°C, more preferably about 100°C to about 140°C.

The said thin outer tread strips are considered to be integral with the tread in a sense that they are prepared by co-extrusion through a single die and later co-vulcanized with the tread components. Thus, the thin tread strips are not a simple laminate formed by coating a relatively cold tread with a solvent based rubber composition or by applying a relatively cold pre-extruded or pre-injection molded rubber strip to a relatively cold tire tread, particularly at temperatures of less than about 50°C, and co-vulcanizing the assembly.

Having the aforesaid thin, outer tread strip formed by co-extrusion through a same, single, die with the tread's cap and base in the tread cap/base construction, is considered herein to be a considerable advantage over simply applying a solvent based rubber coating, or applying pre-injection molded individual tread components, over the tread cap because (i) adhesion of the components of the laminate is considered herein to be better since they are created to form the extruded laminate in their hot, unvulcanized state, (ii) a better co-vulcanization is considered herein to take place, and (iii) a possibility of exposed surface contamination is reduced or eliminated.

Terms such as "co-extrusion" "tri-extruded" are intended to mean that rubber components are extruded through the same, single, die and not simply separately extruded and, then joined together.

Desirably, the tire of claim is characterized in that said tread cap has an electrical resistance greater than 20,000 megohms and said tire with said circumferential, thin tread strips has an electrical resistance of less than 100 megohms from said tread strips on the face of said tread cap to the said tire bead portions, according to Test GT-L, and where said tread strips have a thickness within in a range of about 0.005 to about 0.08 cm.

Such tire is vulcanized whereby the said thin tread strips are co-vulcanized and is thereby integral with said tread cap and also said tread wings.

In practice, an electrical path of less than about 100 megaohms is provided, according to Test GT-L, for said tire with a tread cap having an electrical resistance of greater than 20,000 megohms, from the said tread strip on the face of the tire tread and within the interface between said tread and tread wings, thence through said tread wings to said tire sidewalls, thence through said tread sidewalls to said tread bead portions.

The referenced tread components, namely the tread, tread cap, tread base and wings, sometimes referred to as miniwings, are tread components well known to those skilled in such art. For clarification, reference to the accompanying drawings may be made.

In one aspect of the invention, it is desired that the carbon black, particularly for the said thin, outer tread layer, be suitably electrically conductive for practical purposes, namely for the rubber composition containing the carbon black to have a suitable electrical resistance to suitably dissipate electrical energy as it is generated. It is considered herein that the electrical resistance of the tire should not be more than, and thus a maximum, of about 100 megohms as measured by Test GT-L which is hereinafter described in Example I.

Suitable carbon blacks contemplated for use in this invention are carbon blacks having sufficient surface area demonstrated by BET in a range of about 30 to about 1000 m²/g. It is recognized that most carbon blacks typically utilized for tire tread reinforcement purposes possess BET values which fall within this range. BET surface area values and method determination for carbon blacks are well known to those skilled in such art.

In further accordance with this invention, a tire is provided composed of carcass components comprised of sulfur vulcanized carbon black reinforced elastomers together with an outer circumferential silica reinforced tread having said co-extruded tread strips co-vulcanized therewith.

The resultant tire assembly is shaped and sulfur cured in a suitable mold to form a vulcanized tire with a tread of lug and groove configuration.

While not limited thereto, numerous sulfur vulcanizable elastomers and combinations thereof may be used in the construction of various elements of the tire.

Elastomers contemplated are homopolymers and copolymers of conjugated diene hydrocarbons and copolymers of conjugated dienes and aromatic vinyl compounds such as, for example, styrene and alphamethylstyrene. Representative of various dienes are, for example, isoprene and butadiene. Representative of various elastomers are, for example, cis 1,4-polyisoprene (natural and synthetic), cis 1,4-polybutadiene, styrene/butadiene copolymers both emulsion and organic solution polymerization prepared copolymers, isoprene/butadiene copolymers, 3,4-polyisoprene, medium vinyl polybutadiene containing about 30 to about 70 percent vinyl content and styrene/isoprene/butadiene terpolymers.

The tire is then constructed by building a coextruded tread onto a rubber tire carcass. Such construction and building process are well known to those having skill in such art.

Tire assembly is vulcanized in a suitable mold under conditions of elevated temperature, for example, in a range of about 140°C to 180°C.

The co-vulcanized, carbon black reinforced, thin, outer tread strips provide a relatively low path of electrical resistance from the face of the tire tread into the interface between the tread and the aforesaid wings, as compared to a silica reinforced tire tread and, thus, a path for dissipation of static electricity between the ground and the tire bead portion and thence the metal rim of the vehicular wheel on which the tire may be mounted.

After the tire tread, in service, becomes worn so that the rubber tread strip on the face of the tire tread lugs is worn away, the path for dissipation of static electricity is maintained by the portion of the tread strips on the walls of the grooves (or lugs) of the tread cap.

The accompanying drawings are provided for further understanding of the invention, although it is not intended that the invention be limited to the presentation of the drawings. In the drawings:
FIGURES 1 to 3 are cross-sectional views of extruded, unvulcanized treads of several configurations
FIGURE 4 depicts a cross-sectional, perspective view of a portion of an unvulcanized tire.
FIGURE 5 is a cross-sectional view of a portion of a shaped and vulcanized tire in its tread region in which the tread's raised lug and groove configuration is depicted.
FIGURE 6 is a cross-sectional, perspective view of a portion of a shaped and vulcanized tire showing the tread's lug and groove configuration.
FIGURE 7 is similar to FIGURE 6 except that it depicts a an outer portion of tire tread lugs being worn, or otherwise abraded such as by buffing, away.

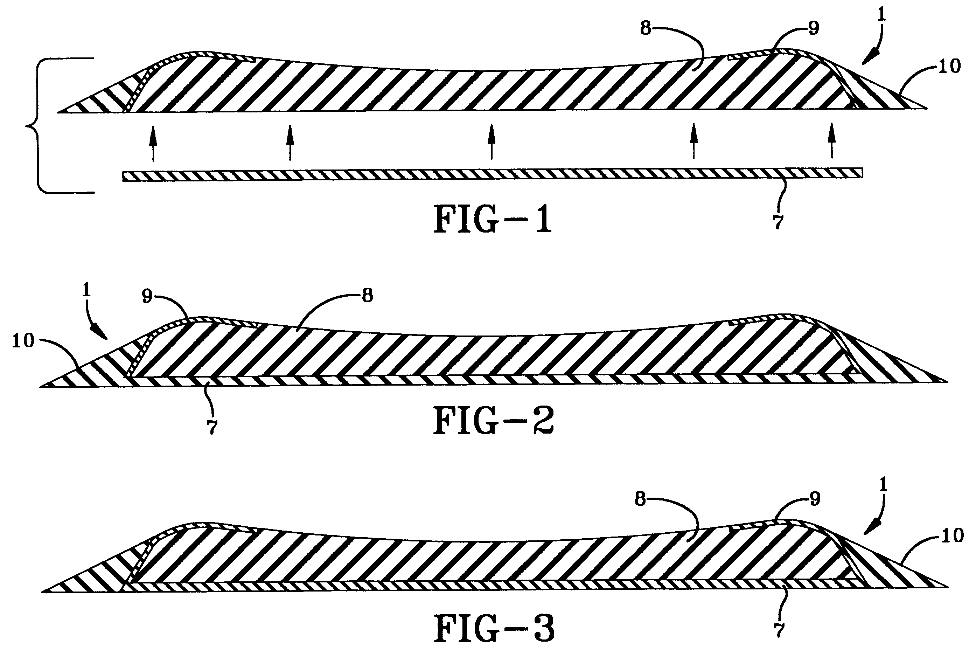

Referring to the drawings, in FIGURE 1 a cross-section of a co-extrusion (a product of simultaneous co-extrusion of three individual rubber compositions through the same die) of an unvulcanized rubber tread construction 1 is shown having components which will become, after building the tire and upon shaping and vulcanizing the tire in a suitable mold, (i) the tread, or tread cap, 8, of a silica reinforced rubber composition normally intended to be ground-contacting, (ii) tread wings 10 of a carbon black reinforced rubber composition, in combination with (iii) a thin tread strip 9 of carbon black reinforced rubber composition embedded within a portion of the face of the tread so that the thin strip becomes a part of the face of the tread, wherein the thin strip 9 extends to and is included in the interface between the said tread, or tread cap, 8 and said tread-wings 10 and, further, a tread base 7 is provided as a tire tread component that is laminated to support the said tread cap and is not co-extruded with the tread cap 8, tread wings 10 and said strip 9.

In FIGURE 2 a cross-section of a tri-extrusion (a product of simultaneous co-extrusion of three rubber compositions through the same die) of an unvulcanized rubber tread construction 1 is shown having components which will become, after building the tire and upon shaping and vulcanizing the tire in a suitable mold, (i) a tread cap, 8 of a silica reinforced rubber composition normally intended to be ground-contacting, (ii) tread wings 10 which are an integral part of the tread base 7 of a carbon black reinforced rubber composition, in combination with (iii) two thin tread strips 9 of carbon black reinforced rubber composition embedded within a portion of the face of the tread so that the thin strip becomes a part of the face of the tread, wherein the thin strips 9 extend to and are included in the interface between the said tread cap 8 and said tread-wings 10. Here, the tread wings 10 and tread base 7 are of a unitary construction and rubber composition.

In FIGURE 3 a cross-section of a tri-extrusion (a product of simultaneous co-extrusion of three tire tread components through the same die) of an unvulcanized rubber tread construction 1 is shown having components which will become, after building the tire and upon shaping and vulcanizing the tire in a suitable mold, (i) a tread cap, 8 of a silica reinforced rubber composition normally intended to be ground-contacting, (ii) tread wings 10, tread base 7 of a carbon black reinforced rubber composition, (iii) tread base 7 underlying said tread cap 8 and composed of a carbon black reinforced rubber composition, in combination with (iv) thin tread strips 9 of carbon black reinforced rubber composition embedded within a portion of the face of the tread so that the thin strips become a part of the face of the tread, wherein the thin strips 9 extend to and are included in the interface between the said tread cap 8 and said tread-wings 10 and, further extend to the said tread base 7. Here, the tread base 7 and tread strips 9 are of a unitary construction and rubber composition.

As indicated, various components of the tread construction are extruded together in a multiplex extruder through the same, or single, die to form the tread constructions. Such extrusion processes are well known to those having skill in such art.

It is important to appreciate that the strips 9 are very thin such as, for example, about a 0.05 cm, or less, thickness. This, in one aspect, is to accommodate the strips becoming embedded in the face, or outer surface intended to be ground-contacting, of the tread cap so the face of the tread cap presents a continuous smooth curve without the strips presenting raised portions on top of the face of the tread cap.

Further FIGURES 1-3 show the preferred aspect of the invention in which the strips 9 extend into only a portion of the outer periphery of the tread face in the region where the tread 8 joins the tread wings 10 through the said strip 9, namely less than about 30 percent of the tread face, so that a major portion of the tread cap remains exposed that is intended to be ground-contacting.

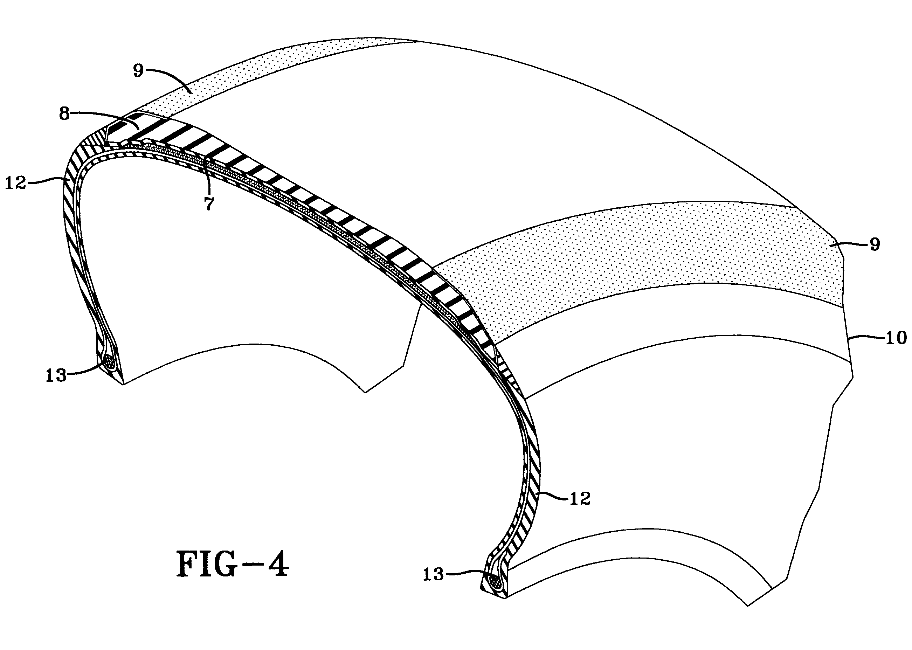

FIGURE 4 shows a part of an unvulcanized tire construction with bead portions 13, tire sidewalls 12, supporting carcass 12 together with a tire tread having the said tread cap 8, tread wings 10 and tread base 7 together with the said thin strips 9 embedded in a peripheral portion of the tread face and extending to and including the interface between the tread cap 8 and the tread wings 10.

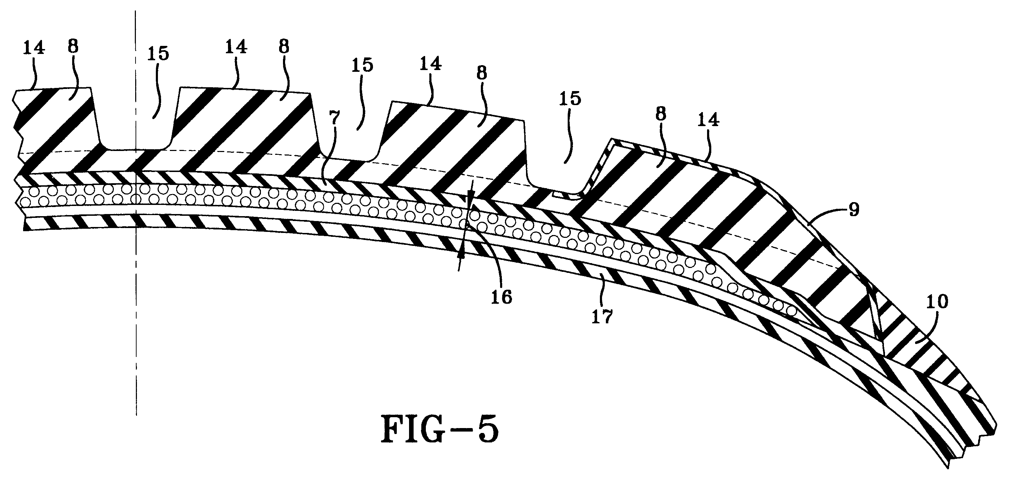

FIGURE 5 shows a part of a cross-section of the tire tread after it has been shaped and vulcanized to form the tread lugs 14 and tread grooves 15. Incidental underlying tread belts 16 and tire carcass liner 17 are also shown. The said strips 9 are shown as a an integral part of the face of the tire tread cap 8 and extending across at least one lug 14 and into at least a portion of one groove 15.

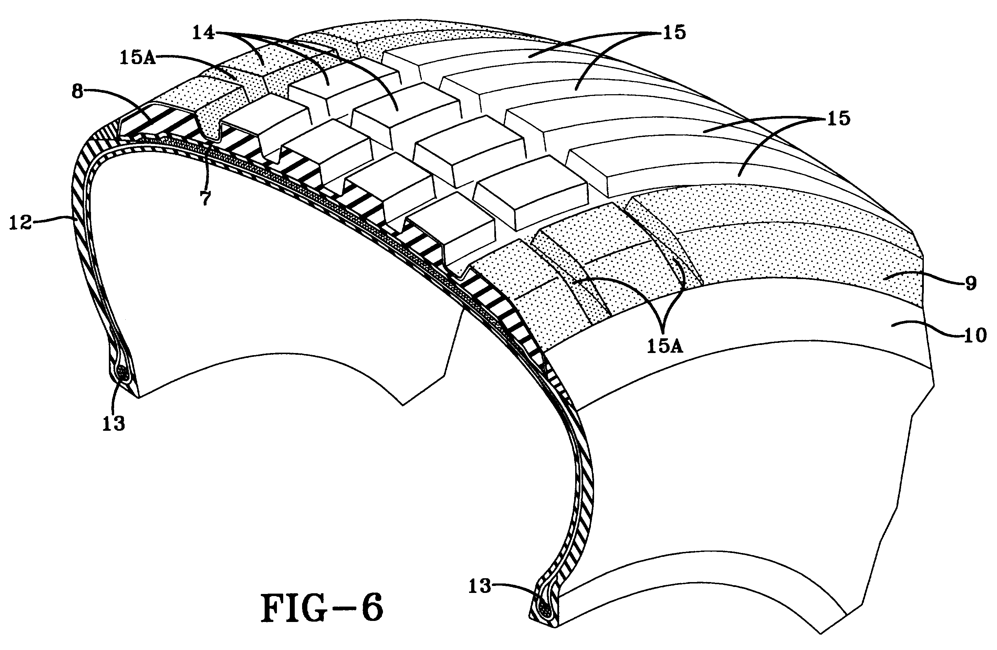

FIGURE 6 shows the same tire as FIGURE 5 in a perspective, crosssectional view and, in general, represents the tire shown in FIGURE 4 and being shaped and vulcanized to form the said lugs 14 and grooves 15. In this FIGURE 6, at least one groove 15A is termed herein a "connecting groove" which is positioned laterally to connect to the tire tread wings.

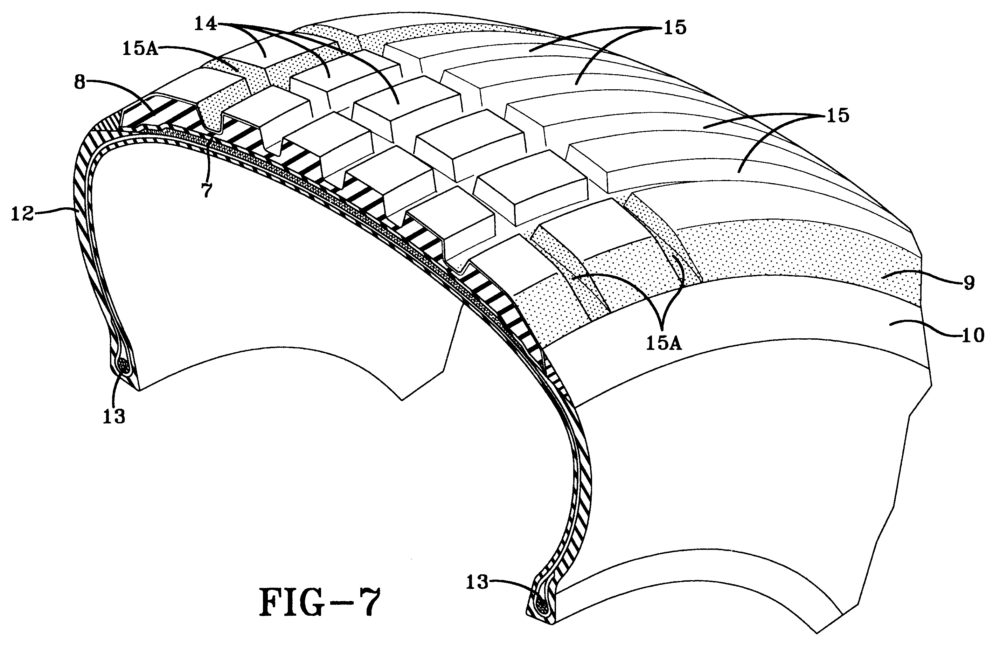

FIGURE 7 shows the same tire as FIGURE 6 except that a the face of the tire tread cap has been worn, or abraded, away, included the strips 9 which were an integral part of a peripheral portion of the face of the tread cap. Here, the remaining part of the strips 9 intended to be grounding contacting is the cross-section of the strips on the walls of the groove(s) 15, including the walls of the said connecting groove 15A.

In this manner, then, an electrical path is hereby provided which extends from a portion of the face of the silica reinforced tread-cap which is intended to a ground-contacting via the said carbon black reinforced strips 9 which are integral with the interface of the tread cap 8 and carbon black reinforced tread wings 10 positioned over a part of the carbon black reinforced tire sidewalls 12 and thus to the sidewalls 12 and ultimately to the carbon black reinforced tire bead portions 13 from which the sidewalls 12 extend.

A second path would be that the gumstrip touching the base or the belt and over the carcass contacting the bead/chafer that then contacts the rim.

As the tire, having been mounted and inflated on a suitable electrically conductive rigid metal rim, itself mounted on a wheel of a vehicle, rolls across the ground, a path for electrical dissipation, is created between the rim to the face of the tread, and thereby the ground, by the aforesaid tread strips 9 as they are integral with at least one other carbon black reinforced rubber component of the tire.

As the said thin tread strips 9 in the outer, ground-contacting surfaces of the tread lugs 14 wears away to present a part of the underlaying tread cap 8, an electrical path between the ground and shoulder of the tire can maintained by the said thin, tread strips 9 on the walls of the tread lugs 14 (or walls of the lugs 15), which themselves contact the ground, and further via the walls of the connecting groove path 15A which extends to the tread wings 10 and thereby includes a cross-section of the interface between the tread cap 8 and tread wings 10.

In practice, the commonly employed siliceous pigments (silica) for reinforcement of the tread cap rubber composition are preferably precipitated siliceous pigments and is referred to herein as being silica.

The silicas preferably employed in this invention are precipitated silicas such as, for example, those obtained by the acidification of a soluble silicate, e.g., sodium silicate.

The siliceous pigment (silica) should, for example, have an ultimate particle size in a range of 50 to 10,000 angstroms, preferably between 50 and 400 angstroms. The BET surface area of the pigment, a measurement using nitrogen gas, is preferably in the range of about 50 to about 300, preferably about 80 to about 200, square meters per gram. The BET method of measuring surface area is described in the Journal of the American Chemical Society, Volume 60, page 304 (1930).

The silica also typically has a dibutylphthalate (DBP) absorption value in a range of about 100 to about 400, and usually about 150 to about 300.

The silica might be expected to have an average ultimate particle size, for example, in a range of about 0.01 to 0.05 micron as determined by the electron microscope, although the silica particles may be even smaller in size.

Various commercially available silicas may be considered for use in this invention such as, for example, only and without limitation, silicas commercially available from PPG Industries under the Hi-Sil trademark with designations 210, 243, etc; silicas available from Rhone-Poulenc, such as, for example, Zeosil 1165MP and silicas available from Degussa AG with designations such as, for example, VN2, VN3, and 3370.

When quantitative silica reinforcement is desired for a rubber tire tread, particulate, precipitated silica is conventionally used with a coupling agent, or what is sometimes referred to as a silica coupler.

Compounds capable of reacting with both the silica surface and the rubber elastomer molecule, in a manner to cause the silica to have a reinforcing effect on the rubber, many of which are generally known to those skilled in such art as coupling agents, or couplers, are often used. Such coupling agents, for example, may be premixed, or pre-reacted, with the silica particles or added to the rubber mix during the rubber/silica processing, or mixing, stage. If the coupling agent and silica are added separately to the rubber mix during the rubber/silica mixing, or processing stage, it is considered that the coupling agent then combines in situ with the silica.

In particular, such coupling agents may, for example, be composed of a silane which has a constituent component, or moiety, (the silane portion) capable of reacting with the silica surface and, also, a constituent component, or moiety, capable of reacting with the rubber, particularly a sulfur vulcanizable rubber which contains carbon-to-carbon double bonds, or unsaturation. In this manner, then the coupler acts as a connecting bridge between the silica and the rubber and thereby enhances the rubber reinforcement aspect of the silica.

In one aspect, the silane of the coupling agent apparently forms a bond to the silica surface, possibly through hydrolysis, and the rubber reactive component of the coupling agent combines with the rubber itself.

Numerous coupling agents are taught for use in combining silica and rubber, such as for example, silane coupling agents containing a polysulfide component, or structure, such as bis-(3-triethoxysilylpropyl)tetrasulfide.

It is readily understood by those having skill in the art that the rubber composition of the tread rubber would be compounded by methods generally known in the rubber compounding art, such as mixing the various sulfur-vulcanizable constituent rubbers with various commonly used additive materials such as, for example, curing aids, such as sulfur, activators, retarders and accelerators, processing additives, such as oils, resins including tackifying resins, silicas, and plasticizers, fillers, pigments, fatty acid, zinc oxide, waxes, antioxidants and antiozonants, peptizing agents and reinforcing materials such as, for example, carbon black. As known to those skilled in the art, depending on the intended use of the sulfur vulcanizable and sulfur vulcanized material (rubbers), the additives mentioned above are selected and commonly used in conventional amounts.

Typically additions of carbon black, for this invention, if used, are hereinbefore set forth. Typical amounts of tackifier resins, if used, comprise about 0.5 to about 10 phr, usually about 1 to about 5 phr. Typical amounts of processing aids comprise about 1 to about 50 phr. Such processing aids can include, for example, aromatic, napthenic, and/or paraffinic processing oils. Typical amounts of antioxidants comprise about 1 to about 5 phr. Representative antioxidants may be, for example, diphenyl-p-phenylenediamine and others, such as, for example, those disclosed in the Vanderbilt Rubber Handbook (1978), pages 344-346. Typical amounts of antiozonants comprise about 1 to 5 phr. Typical amounts of fatty acids, if used, which can include stearic acid comprise about 0.5 to about 3 phr. Typical amounts of zinc oxide comprise about 2 to about 5 phr. Typical amounts of waxes comprise about 1 to about 5 phr. Often microcrystalline waxes are used. Typical amounts of peptizers comprise about 0.1 to about 1 phr. Typical peptizers may be, for example, pentachlorothiophenol and dibenzamidodiphenyl disulfide.

The vulcanization is conducted in the presence of a sulfur vulcanizing agent. Examples of suitable sulfur vulcanizing agents include elemental sulfur (free sulfur) or sulfur donating vulcanizing agents, for example, an amine disulfide, polymeric polysulfide or sulfur olefin adducts. Preferably, the sulfur vulcanizing agent is elemental sulfur. As known to those skilled in the art, sulfur vulcanizing agents are used in an amount ranging from about 0.5 to about 4 phr, or even, in some circumstances, up to about 8 phr, with a range of from about 1.5 to about 2.5, sometimes from 2 to 2.5, being preferred.

Accelerators are used to control the time and/or temperature required for vulcanization and to improve the properties of the vulcanizate. Retarders are also used the rate of vulcanization. In one embodiment, a single accelerator system may be used, i.e., primary accelerator. Conventionally and preferably, a primary accelerator(s) is used in total amounts ranging from about 0.5 to about 4, preferably about 0.8 to about 1.5, phr. In another embodiment, combinations of a primary or and a secondary accelerator might be used, with the secondary accelerator being used in amounts of about 0.05 to about 3 phr, for example, in order to activate and to improve the properties of the vulcanizate. Combinations of these accelerators might be expected to produce a synergistic effect on the final properties and are somewhat better than those produced by use of either accelerator alone. In addition, delayed action accelerators may be used which are not affected by normal processing temperatures but produce a satisfactory cure at ordinary vulcanization temperatures. Suitable types of accelerators that may be used in the present invention are amines, disulfides, guanidines, thioureas, thiazoles, thiurams, sulfenamides, dithiocarbamates and xanthates. Preferably, the primary accelerator is a sulfenamide. If a second accelerator is used, the secondary accelerator is preferably a guanidine, dithiocarbamate or thiuram compound. The presence and relative amounts of sulfur vulcanizing agent and accelerator(s) are not considered to be an aspect of this invention which is more primarily directed to the use of silica as a reinforcing filler in combination with a coupling agent.

The presence and relative amounts of the above additives are not considered to be an aspect of the present invention which is more primarily directed to a tire with a tread outer cap of carbon black reinforced rubber over a silica reinforced portion of the tread to provide a path of relatively low electrical resistance from the outer surface of the tread to the bead portion of the tread.

The tire can be built, shaped, molded and cured by various methods which will be readily apparent to those having skill in such art.

The invention may be better understood by reference to the following examples in which the parts and percentages are by weight unless otherwise indicated.

### EXAMPLE I

Electrical resistance of a tire, for the purposes of this invention, is measured with the assistance of an electrically conductive rigid metal (steel, for example) rim onto which the tire is mounted to create a tire/rim assembly, a flat steel plate onto which the tire of the tire/rim assembly is pressed, and an instrument for measuring the associated electrical resistance between the rim and the aforesaid steel plate.

The test prescribed herein is designated herein, for the purposes of this description as a loaded electrical resistance test which, for convenience, may be referred to herein as Test GT-L. Such test is not, at this time, a prescribed ASTM or tire industry association test procedure.

### Apparatus and Procedure:

1. flat steel plate having a thickness of at least about 5 mm and a length and width greater than the footprint of the tire to be tested;
2. an electrically insulative, electrically non-conductive plate (polyethylene, for example) at least as long and wide as aforesaid steel plate and positioned beneath and against the steel plate - whereby the insulation resistance from the steel plate through the insulative plate being at least 100 times greater than the measured test value for the electrical resistance between the tire tread (eg. the aforesaid steel plate) and the steel rim of the aforesaid tire/rim assembly;
3. voltage source of at least 100 volts and power within 0.01 and 3 watts and resistance meter instrumentation for reading resistance in ohms or megohm with an accuracy of +/- 10 percent;
4. appropriate copper connective wiring;
   (a) from the steel rim of the tire/rim assembly copper strip to the resistance instrumentation; and
   (b) from the steel plate to the resistance instrumentation;
5. tire to be tested;
6. electrically conductive steel wheel rim; and
7. apparatus for pressing the tire/rim assembly against the steel plate and associated pressure measuring instrument.

According to the test procedure, the tire is mounted on a steel rim and inflated with air pressure to 100 percent of test pressure of about 2.2 bar which is considered herein as being standard for radial passenger tires.

Prior to testing, the tire is inflated, on the steel rim, to the test pressure and for at least 8 hours at ambient temperature between 15 and 30°C at a relative humidity of less than 60 percent.

A test load is applied to the tire/rim assembly against the aforesaid steel plate in an amount equal to 80 percent of the load indicated for the tire by its load index.

The tire/rim assembly is loaded, as described above, twice within one minute. Then the assembly is loaded for a third time for a duration of three minutes after which the electrical measurements are taken and reported in ohms or megohms resistance between the rim and the steel plate beneath the loaded tire tread. This procedure is repeated at least three times at approximately equal spaced locations around the tire.

### EXAMPLE II

Pneumatic rubber tires, identified herein as Tires A, B and C, are prepared of a 175/65R14 type and size. All of the tires have identical carbon black reinforced rubber carcasses with associated beads and sidewalls. All of the tires have tires with treads of a cap/wing construction. All of the treads are of the same surface configuration of lugs and grooves, with the grooves connecting with the tires' sidewalls in the shoulder region, through a laterally extending connecting groove, in a manner similar to FIG. 6.

All of the tire treads are a co-extruded laminae, composed of a tread cap and two individual, lateral tread wings, similar to FIG 1.

The tire tread cap and tread wings are composed of carbon black reinforced rubber for the tread wings co-extruded through the same, single die with the silica reinforced rubber composition for the tread cap.

In particular, the tire identified herein as Tire B has a tread composed of co-extruded carbon black reinforced rubber tread wings and a quantitatively silica reinforced rubber tread cap and differs from Tire A by also having a co-extruded (co-extruded with said tread cap and tread wings) carbon black reinforced thin tread strips located in the interface between said tread cap and wings similar to FIG. 6.

In particular, the tire identified herein as Tire C is the same as Tire B except that half the thickness of the tread has been buffed away, thus, removing the said thin tread strip from the outer lug surfaces of the tread in a manner similar to FIG 7.

The tires are evaluated for their electrical resistance by the aforesaid Test GT-L.

The compositions for the respective tread wings and tread cap and said thin tread strip for the tires are comprised of the materials shown in the following Tables 1 and 2.

In particular, tire A's tread is a co-extrusion of the tread wing of composition shown in Table 1 and the tread cap of composition shown in Table 2. Tire A does not have a tread strip.

In particular, tire B's and tire C's tread is a tri-extrusion of the tread wing of composition shown in Table 1 and both the tread cap and tread strip of compositions shown in Table 2.

The aforesaid co-extruded treads are suitably built onto the tire carcasses and the assembly thereof vulcanized in a tire mold at a temperature of about 160°C for about 15 minutes to form cured pneumatic tires with tread configurations of lugs and grooves.

**Table 1**

| **(Tread Wing)** | |
|---|---|
| Tires A, B and C | Parts |
| BR¹ | 60 |
| Natural Rubber² | 40 |
| Processing Aids³ | 20 |
| Fatty Acid | 2 |
| Carbon Black, N550 | 50 |

| Productive Mix Stage | |
|---|---|
| Sulfur | 2.5 |
| Zinc Oxide | 2 |
| Antioxidant(s)⁴ | 5.5 |
| Sulfenamide and Thiuram Type Accelerators | 1 |

| | |
|---|---|
| 1) Cis 1,4-polybutadiene rubber obtained as Budene® 1207 from The Goodyear Tire & Rubber Company. | |
| 2) Natural rubber (cis 1,4-polyisoprene). | |
| 3) Rubber processing oil, plasticizers, resins and waxes. | |
| 4) Of the di-aryl paraphenylene diamine and dihydro-trimethyl quinoline type. | |

**Table 2**

| **(Tread Cap and Tread Strip)** | | |
|---|---|---|
| Tire A (without Tread Strip) & Tires B and C | Tread Cap | Tread Strip |
| | | |

| Non-Productive Mix Stages | | |
|---|---|---|
| E-SBR¹ | 25 | 25 |
| Isoprene/Butadiene² | 45 | 45 |
| Rubber | | |
| BR³ | 20 | 20 |
| Natural Rubber⁴ | 10 | 10 |
| Processing Aids⁵ | 25 | 25 |
| Fatty Acid | 2 | 2 |
| Silica⁷ | 80 | 0 |
| Carbon Black, Tread Type | 0 | 80 |
| Coupling Agent⁸ | 12 | 0 |

| Productive Mix Stage | | |
|---|---|---|
| Sulfur | 1 | 1 |
| Zinc Oxide | 4 | 4 |
| Antioxidant(s)⁶ | 3 | 3 |
| Sulfenamide and Thiuram Type Accelerators | 4 | 2 |

| | | |
|---|---|---|
| 1) Emulsion polymerization prepared SBR obtainable from The Goodyear Tire & Rubber Company having styrene contents of about 23 percent. | | |
| 2) Isoprene/butadiene copolymer elastomer having a Tg of about -45°C and an isoprene content of about 50 percent obtained from The Goodyear Tire & Rubber Company. | | |
| 3) Cis 1,4-polybutadiene rubber obtained as Budene® 1207 from The Goodyear Tire & Rubber Company. | | |
| 4) Natural rubber (cis 1,4-polyisoprene). | | |
| 5) Rubber processing oil as being about 9.4 parts in the E-SBR, where the amount of E-SBR is reported above on a dry weight (without the oil) and in addition, about 14 parts additional rubber processing oil, plasticizers, resins and waxes were added. | | |
| 6) Of the di-aryl paraphenylene diamine and dihydro-trimethyl quinoline type. | | |
| 7) A silica obtained as Zeopol 8745 from the Huber company. | | |
| 8) Obtained as bis-3-(triethoxysilylpropyl) tetrasulfide (50% active) commercially available as X50S from Degussa as a 50/50 blend of the tetrasulfide with N330 carbon black (thus, considered 50% active). | | |

### EXAMPLE II

Electrical resistance measurements were conducted on Tires A, B and C using the hereinbefore described Test GT-L. The results of the tests are shown in the following Table 3.

**Table 3**

| Tire | Electrical Resistance¹ |
|---|---|
| A | Greater than 20,000 |
| B | 2.5 |
| C | 3.0 |

| | |
|---|---|
| 1) Megohms. | |

These electrical resistance measurements demonstrate that, for a tire with tread of silica reinforced rubber, the application of the co-extruded, co-vulcanised top cap layer between the tread cap and miniwings in a tread construction of tread cap/miniwings, where the tread cap is quantitatively silica reinforced with only a minimal, if any, carbon black reinforcement can significantly reduce the electrical resistance of the tire.

While certain representative embodiments and details have been shown for the purpose of illustrating the invention, it will be apparent to those skilled in this art that various changes and modifications may be made therein without departing from the spirit or scope of the invention.

## Claims

1. A pneumatic tire having a circumferential rubber tread of a lug and groove configuration supported by a carbon black reinforced rubber carcass having two individual sidewalls with each sidewall connecting to one of two spaced apart individual bead portions, characterized in that said tread is composed of (i) a tread cap designed to be ground-contacting, (ii) a tread base underlying said tread cap, (iii) two individual tread wings, each tread wing being a lateral extension of a peripheral edge of said tread and (iv) two circumferential, thin, outer tread strips, each individual tread strip being a part of a portion of the face of the said tread adjacent to each of said tread wings to include at least a portion of at least one tread groove adjacent to at least one tread lug; wherein each tread strip extends to and includes at least a portion of the interface between said tread and tread wings, all without overlapping said tread wings and without extending to said bead portions; wherein said tread wings each individually contact and extend over a portion of the outer surface of a sidewall of the tire carcass; wherein said tread cap is a rubber composition which contains 30 to 100 phr of precipitated silica and, optionally, up to 20 phr of carbon black; and wherein said tread strips, tread wings and tread base are rubber compositions which contain 25 to 100 phr of carbon black.

2. The tire of claim 1 characterized in that the said tread is composed of said tread cap, tread wings, tread base, and tread strips, wherein said tread wings and tread base are of a single, unitary rubber composition.

3. The tire of claim 1 characterized in that the said tread is composed of said tread cap, tread wings, tread base, and tread strips, wherein said tread strips and tread base are of a single, unitary rubber composition.

4. The tire of any of the preceding claims characterized in that the said integral, thin outer tread strips cover less than 50 percent of the face of the tire tread and wherein said tread cap has an electrical resistance of at least 10,000 megohms.

5. The tire of any of the preceding claims characterized in that said tread cap has an electrical resistance greater than 20,000 megohms and said tire with said circumferential, thin tread strips has an electrical resistance of less than 100 megohms from said tread strips on the face of said tread cap to the said tire bead portions, according to Test GT-L, and where said tread strips have a thickness within in a range of 0.005 to 0.08 cm; wherein said thin tread strip(s) is co-vulcanized, and is thereby integral, with said tread cap and tread wings; whereby an electrical path of less than 100 megohms is provided from said tread strip on the face of the tire tread and within the interface between the tread and tread wings, thence through the tread wings to the tire sidewalls, thence through the tire sidewalls to the tire bead portions.

6. The tire of any of the preceding claims characterized in that the said tread cap, tread wings and said tread strip are formed as a single component by simultaneous tri-extrusion of individual rubber compositions through a same, single die at a temperature in a range of 80°C to 150°C.
